# EUROPÄISCHE PATENTSCHRIFT

(11) **EP 3 517 654 B1**
(45) Veröffentlichungstag und Bekanntmachung des Hinweises auf die Patenterteilung: **13.09.2023**
(21) Anmeldenummer: 19153984.0
(22) Anmeldetag: 28.01.2019
(51) Int. Cl.: C25D 1/10, B29C 33/38, B29C 45/26, B29C 45/37

(54) **VERFAHREN ZUR HERSTELLUNG EINES FORMEINSATZES MIT (SUB-)MIKROSTRUKTUREN SOWIE WERKSTÜCK MIT (SUB-)MIKROSTRUKTUREN**
METHOD OF MAKING A MOLD INSERT WITH (SUB)MICROSTRUCTURES AND WORKPIECE COMPRISING (SUB)MICROSTRUCTURES
PROCÉDÉ DE FABRICATION D'UN INSERT DE MOULE À (SOUS-)MICROSTRUCTURES AINSI QUE PIÈCE À USINER À (SOUS-)MICROSTRUCTURES

(30) Priorität: 30.01.2018 AT 500812018
(43) Veröffentlichungstag der Anmeldung: 31.07.2019
(73) Patentinhaber: Joanneum Research Forschungsgesellschaft mbH, 8010 Graz (AT); KDG Opticomp GmbH, 6652 Elbigenalp (AT)
(72) Erfinder: Kuna, Ladislav, 8182 Puch bei Weiz (AT); Wörle, Alexander, 6653 Bach (AT)
(74) Vertreter: Patentanwaltskanzlei Matschnig & Forsthuber OG

(56) Entgegenhaltungen:
- WO-A2-2016/094562
- DE-A1- 19 524 099
- GB-A- 2 390 327

## Beschreibung

Die Erfindung betrifft ein neuartiges Verfahren zur Herstellung eines dreidimensionalen Formeinsatzes mit Sub-Mikrostrukturen und/oder Mikrostrukturen. Weiters wird im Rahmen der Erfindung ein Werkstück mit Sub-Mikrostrukturen und/oder Mikrostrukturen in Form einer optischen Komponente angegeben, welches verfahrensgemäß unter Verwendung des Formeinsatzes mit Sub-Mikrostrukturen und/oder Mikrostrukturen hergestellt ist.

Im Rahmen der vorliegenden Erfindung sind unter dem Begriff einer Mikrostruktur solche Strukturen zu verstehen, deren charakteristische Abmessungen im Mikrometer-Maßstab von einem Mikrometer (µm) bis zu wenigen Mikrometer (µm) groß sind. Unter Sub-Mikrostrukturen ist im Folgenden zu verstehen, dass die betreffenden Strukturen charakteristische Abmessungen aufweisen, die kleiner als ein Mikrometer (µm) sind und folglich im Sub-Mikrometermaßstab liegen. Folglich sind mit dem Begriff einer Sub-Mikrostruktur auch Strukturen mit charakteristischen Abmessungen bzw. mit Strukturgrößen von mehreren Nanometern (nm) mitumfasst. Im Gegensatz dazu wird im Folgenden der Begriff von Makrostrukturen für solche Strukturen gewählt, die deutlich größere charakteristische Abmessungen beispielsweise im Millimeter (mm)- oder aber im Zentimeter (cm)-Maßstab aufweisen. Die im Weiteren gewählte Schreibweise von Sub-Mikrostrukturen und/oder Mikrostrukturen soll darauf hinweisen, dass derartige Strukturen charakteristische Abmessungen zeigen, die jedenfalls im Mikrometer-Maßstab maximal einige wenige Mikrometer, bevorzugt jedoch kleiner als ein Mikrometer groß sind.

Sub-Mikrostrukturen und/oder Mikrostrukturen auf dreidimensionalen Makrooptiken haben in letzter Zeit zahlreiche neue Anwendungen beispielsweise in den Bereichen der Optoelektronik, Photonik, Bildverarbeitungssensorik, Machine Vision, Robotik und in Motion-Control-Systemen gefunden. Die Kombination verschiedener optischer Funktionen auf einem einzigen Element kann wesentlich zur Miniaturisierung der optischen Komponenten, einer besseren Integration im System und zu niedrigeren Preisen beitragen. Die Entwicklung von neuartigen komplexen dreidimensionalen 3D-optischen Systemen, wobei Mikro- bzw. Sub-Mikrostrukturen auf Makrostrukturen angeordnet sind, bringen allerdings zahlreiche Herausforderungen hinsichtlich der Gestaltung und der Fertigung mit sich.

Aus dem Stand der Technik sind bereits seit längerem etablierte Methoden bekannt, mit denen Mikrostrukturierungen auf planaren Substraten wie beispielsweise Silizium-Wafern gefertigt werden können. Beispielhaft sei dazu auf das sogenannte LIGA Fertigungsverfahren hingewiesen, wobei das deutsche Akronym LIGA für die Verfahrensschritte: Lithographie, Galvanik und Abformung steht. Bei diesem Verfahren wird mittels einer Kombination von Tiefenlithographie, Galvanik und Mikroabformung die Herstellung von Mikrostrukturen mit Abmessungen bis zu 0,2 µm, Strukturhöhen bis 3 mm und Aspektverhältnissen etwa bis 50 aus den Materialien Kunststoff, Metall oder Keramik ermöglicht. Nachteilig an diesem Verfahren ist zumindest, dass das Ausgangsmaterial ein ebenes, planares Substrat, beispielsweise ein Siliziumwafer oder eine polierte Scheibe aus Metall oder einem anderen harten Material sein muss.

Sub-Mikrostrukturen und/oder Mikrostrukturen auf ebenen, planaren Substraten werden meistens mittels direkter Strukturierungsmethoden wie beispielsweise Laser-, Ionen- oder Elektronenstrahllithographie erzeugt. Die Anwendung dieser Methoden zur Mikro-Strukturierung für nicht-planare Oberflächen von dreidimensionalen Objekten ist allerdings komplex und erfordert zumindest eine spezielle Adaptierung der bestehenden Anlagen sowie neuartige Herstellungsstrategien.

Weiters sind aus den Dokumenten GB 2 390 327 A, WO 2016/094562 A2 und DE 19524099 A1 Verfahren zur Abformung von Strukturen bekannt geworden. Die GB 2 390 327 A betrifft ein indirektes Abform-Verfahren (Imprint-Verfahren), bei dem indirekt Strukturen, die auf einem planen Stempel aufgebracht werden, mit dem Stempel auf ein Makroobjekt mit einer geometrisch einfachen Makrostruktur übertragen werden. Die WO 2016/094562 A2 betrifft ein Verfahren zur Herstellung einer Metallform zum Gießen einer trockenen Kleberstruktur. Die DE 19524099 A1 betrifft ein Verfahren zur Herstellung von Formeinsätzen.

Im Bereich der Optik ist es für die Miniaturisierung von leistungsfähigen Optiken erforderlich, mikrooptische, also beispielsweise diffraktive, refraktive und/oder reflektive Strukturen auf makroskopischen Elementen, beispielsweise auf optischen Linsen zu integrieren.

Um für den sichtbaren Spektralbereich wirksame mikrooptische Elemente zu realisieren, kann für einzelne Anwendungen die Verwendung von minimalen Strukturgrößen bis in den Sub-Mikrometerbereich notwendig sein.

Die Kombination von Makro- und Sub-Mikrooptiken auf ein und demselben Werkstück beispielsweise einer optischen Komponente ist allerdings generell eine große Herausforderung, die darin begründet ist, dass die Anforderungen an die Genauigkeit der Sub-Mikro-Strukturform, der Strukturgröße im Sub-Mikrometerbereich und insbesondere an die Oberflächenqualität im Nanometerbereich der optischen Komponenten sehr hoch angesetzt sind. Bereits eine geringfügige Abweichung von Form oder Große einer Komponente oder eine nicht optisch glatte Oberfläche kann zu einer deutlichen Verschlechterung der optischen Funktionalität der gesamten optischen Komponente führen.

Prinzipiell sind aus dem Stand der Technik drei Technologien bekannt, um Sub-Mikrostrukturen und/oder Mikrostrukturen auf dreidimensionalen Oberflächen von Rohlingen bzw. Modellobjekten oder aber auf dreidimensionalen Werkstücken fertigen zu können. Es sind dies einerseits direkte Strukturierungsmethoden wie beispielsweise die direkte Laserstrahllithographie, weiters sogenannte Top-Down Herstellungsmethoden wie jene des Einsatzes von fokussierten Ionenstrahlen, die zerspanend oder auch additiv eingesetzt werden können, sowie auch die Ultra-Präzisions-Diamantdrehtechnik, mit denen derartige Mikrostrukturen an sich gefertigt werden können.

Die direkte Zwei-Photonen-Laserstrahllithographie wird beispielsweise zur Fertigung von mikrooptischen Strukturen auf einer schon vorgefertigten 3D Makrooptik als ein additiver Prozess angewandt. Nachteilig ist diese Technik auf zu strukturierende Gesamtflächen von höchstens einigen Quadratmillimetern limitiert. Zudem ist die Prozessierungszeit mit einigen Stunden pro mm² zu lang, um solche Strukturen effizient, kostengünstig und mit hohem Durchsatz zu erzeugen.

Die Fertigung von komplexen submikrooptischen Strukturen auf gekrümmten Oberflächen - beispielsweise mit Krümmungsradien kleiner als 50 mm - von 3D-Makrooptiken ist nach dem Wissensstand der Anmelderin weder mittels direkter Laserstrahllithographie, noch mit sogenannten Top-Down-Methoden wie Soft- und UV-Nanoimprint-Lithographie möglich.

Die dritte zuvor genannte bekannte Technologie ist die Diamantdrehtechnik, die prinzipiell allerdings auf die Fertigung rotationssymmetrischer Objekte beschränkt ist. Auch die Ultra-Präzisions-Diamantdrehtechnik, die zwar an sich auch zur Strukturierung von 3D-Freiform-Optiken im Mikrometer-Maßstab entwickelt wurde, hat Schwachstellen. So weichen die Strukturen bei mittels der Ultra-Präzisions-Diamantdrehtechnik hergestellten Werkstücken für gewöhnlich im Mikrometermaßstab von der vorgegebenen Strukturform ab. Abweichungen von bis zu 3 µm (Mikrometer) sind dabei üblich.

Die klassischen Techniken für die Fertigung der Makrooptiken sind unter anderem das Schleifen und Fräsen, die meist nur zur Fertigung vergleichsweise großer Optiken im Zentimeterbereich mit relativ einfachen Formen (beispielsweise für eine rotationssymmetrische Linse oder einen Konvexspiegel) geeignet sind. Die Fertigungszeit ist zudem recht lang, was ein iteratives und schnelles Prototyping verhindert. Deswegen existiert hier ebenfalls ein Bedarf für eine alternative effiziente Fertigung von 3D-Makrooptiken.

Die von LUXeXceL entwickelte Technik namens "Printoptical Technology" ist eine weitere mögliche Alternative zu den bereits bekannten klassischen Techniken zur Fertigung komplexer optischer Komponenten. Dabei werden optische Komponenten durch sukzessives Aufbringen kleiner Tröpfchen von polymeren Kunststoffen, die durch UV-Beleuchtung ausgehärtet werden, direkt hergestellt. Allerdings besteht aufgrund der Verwendung von Polymeren die Gefahr einer Degradation des verwendeten Materials, was nachteilig zur Änderung der optischen Eigenschaften der optischen Komponente mit der Zeit führt. Die erzielbare Strukturgröße bei diesem Verfahren ist zudem auf Grund der verwendeten Technologie auf einige Mikrometer limitiert. Andere Beschränkungen existieren hinsichtlich der Komplexität der hergestellten Komponenten, der Genauigkeit der Form und Größe der Komponenten und der Fähigkeit, mit diesem Verfahren optische Komponenten mit hohem Durchsatz herzustellen.

3D-Druck Technologie bietet neben einer hohen Flexibilität beim Design weiters die Möglichkeiten, komplexe "echte" 3D-Makroobjekte zu fertigen sowie kosteneffektives Rapid-Prototyping durchzuführen. Allerdings entspricht die Oberflächenqualität von 3D-Druckerzeugnissen bis dato nicht den hohen Anforderungen für Anwendungen der Optik.

Im Lichte der zuvor angeführten Nachteile aus dem bekannten Stand der Technik besteht daher ein dringender Bedarf für ein verbessertes und effizientes Verfahren zur Herstellung eines dreidimensionalen Formeinsatzes mit Sub-Mikrostrukturen und/oder Mikrostrukturen. Dieses neuartige Herstellungsverfahren soll eine große Flexibilität in der Fertigung der jeweils benötigten Strukturformen und Strukturgrößen aufweisen, um Strukturen sowohl im Mikrometer- als auch im Sub-Mikrometerbereich auf gekrümmten Oberflächen von dreidimensionalen Werkstücken mit höchstmöglicher Präzision und Abbildungstreue der Originalstrukturen eines Modellobjekts abzubilden bzw. zu übertragen.

Die Serienfertigung von Werkstücken, beispielsweise von optischen Komponenten, welche kombiniert ein-, zwei- und/oder dreidimensionale Sub-Mikrostrukturen und/oder Mikrostrukturen sowie dreidimensionale Makrostrukturen aufweisen, ist mit den oben genannten Techniken gegenwärtig aufgrund des sehr niedrigen Durchsatzes und der hohen Herstellungskosten unwirtschaftlich sowie aufgrund der Ungenauigkeiten bei der Abbildung oder Übertragung der Sub-Mikrostrukturen und/oder Mikrostrukturen sehr fehleranfällig. Daher wird erfindungsgemäß vorgeschlagen, mittels Spritzgusstechnologie solche hochpräzisen Werkstücke zu fertigen. Die Spritzgusstechnologie hat prinzipiell das Potenzial, die zuvor genannten Fertigungskriterien hinsichtlich der Präzision und Abbildungstreue von Originalstrukturen eines Modellobjekts sowie die wirtschaftliche Serienfertigung zu erfüllen. Dazu ist es besonders wichtig, hochpräzise Formen für den Spritzguss zu fertigen. Die klassischen Methoden zur Fertigung von Formeinsätzen sind aber vergleichsweise zeitaufwändig und kostenintensiv und eignen sich daher nicht für die iterative Entwicklung eines Produkts. Es besteht somit auch Bedarf für eine kosteneffektive und flexible Herstellung von Formeinsätzen.

Überdies besteht weiterhin Bedarf an hochpräzisen Werkstücken mit Sub-Mikrostrukturen und/oder Mikrostrukturen, welche in gleichbleibender Qualität ihrer Sub-Mikrostrukturen und/oder Mikrostrukturen kostengünstig hergestellt werden können. Insbesondere besteht im Bereich optischer Bauteile der Bedarf, optische Komponenten herstellen zu können, die definierte optische Eigenschaften wie beispielsweise reflexionshemmende Eigenschaften ausschließlich aufgrund ihrer Strukturierung aufweisen, ohne dazu beispielsweise eine herkömmliche Anti-Reflex-Beschichtung zu benötigen.

Es ist somit eine der Aufgaben der vorliegenden Erfindung ein Verfahren zur Herstellung eines Formeinsatzes mit Sub-Mikrostrukturen und/ oder Mikrostrukturen bereitzustellen, das die geschilderten Nachteile des Standes der Technik vermeidet.

Erfindungsgemäß wird diese Aufgabe bei einem gattungsgemäßen Verfahren zur Herstellung eines dreidimensionalen Formeinsatzes mit Sub-Mikrostrukturen und/oder Mikrostrukturen durch die im kennzeichnenden Teil des Anspruchs 1 angegebenen Merkmale gelöst. Vorteilhafte Ausgestaltungen und Fortbildungen der Erfindung sind in den Unteransprüchen sowie der Beschreibung dargelegt.

Ein erfindungsgemäßes Verfahren zur Herstellung eines dreidimensionalen Formeinsatzes mit Sub-Mikrostrukturen und/oder Mikrostrukturen umfasst die folgenden Schritte:
- Anfertigen einer dreidimensionalen Makrostruktur eines Modellobjekts aus Kunststoff mittels 3D-Druck Technologie, wobei die angefertigte Makrostruktur des Modellobjekts zumindest eine Freiformfläche aufweist, wobei die Freiformfläche eine gekrümmte Oberfläche ist, die mittels stückweiser polynomialer mathematischer Funktionen beschreibbar ist;
- Glätten der zumindest einen Freiformfläche der Makrostruktur mittels Schleifen und/oder Polieren, bis eine Rauigkeit der nachbearbeiteten Freiformfläche mit einem Mittenrauwert unter 40 nm erreicht wird;
- Beschichten der zumindest einen Freiformfläche der Makrostruktur mit einer strukturierbaren Beschichtung aus einem lichtempfindlichen Material, wobei mit der Beschichtung eine optisch glatte Oberfläche der zumindest einen Freiformfläche erzielt wird;
- Strukturieren der Beschichtung mittels eines Strukturierungsverfahrens unter Ausbildung von Sub-Mikrostrukturen und/oder Mikrostrukturen auf der Makrostruktur des Modellobjekts;
- Galvanisches Abformen des strukturierten Modellobjekts unter Bildung eines Formeinsatzes mit einer Sub-Mikrostruktur und/oder Mikrostruktur.

Das erfindungsgemäße Herstellungsverfahren erlaubt es, je nach Aufgabenstellung mehrdimensionale, beispielsweise zweidimensionale (2D) oder dreidimensionale (3D) Makrostrukturen eines Modellobjektes anzufertigen. Ebenso kann die Makrostruktur von sogenannten 2,5D-Modellobjekten abgeformt bzw. angefertigt werden. Unter dem Begriff "2,5D" versteht der Fachmann jene Objekte, die an sich dreidimensional sind, jedoch keine definierte Unterkante aufweisen. Beispielsweise werden spherische Linsen, die an ihren Unterkanten abgerundet sind, als 2,5D-Modellobjekte bezeichnet.

Dreidimensionale Makrostrukturen eines Modellobjektes mit einer oder mit mehreren Freiformflächen können beispielsweise mit einem additiven Fertigungsverfahren unter Einsatz eines 3D-Druckers erzeugt werden. Freiformkurven bzw. -flächen lassen sich mittels sogenannter Splines, mathematisch ausgedrückt mittels stückweiser polynomialer Funktionen, beschreiben.

Durch das Beschichten der Makrostruktur mit einer strukturierbaren Beschichtung können vorteilhaft kleine Unebenheiten bzw. Rauigkeiten der angefertigten Makrostruktur ausgeglichen werden.

Die Strukturierung der Beschichtung erfolgt mittels eines geeigneten Strukturierungsverfahrens wie beispielsweise der Laserlithographie oder der Fotostrahllithographie. Vorteilhaft steht beispielhaft mit der sogenannten Ein-Photon-Laserlithographie ein maskenloses Direktbelichtungsverfahren zur Verfügung, welches die Möglichkeit bietet, eindimensionale (1D), zweidimensionale (2D), stufenlose 2,5D- und/oder dreidimensionale Sub-Mikrostrukturen und/oder Mikrostrukturen zu fertigen. Zweckmäßig wird als strukturierbare Beschichtung ein photosensitives Material, beispielsweise ein Fotolack, gewählt.

Beispielsweise kann durch Abtasten des Fotolacks in lateraler XY-Richtung mittels eines fokussierenden Laserstrahls und gleichzeitiger Modulation der Laser-Lichtintensität eine stufenlose 2,5D-Sub-Mikrostruktur bzw. 2,5D-Mikrostruktur wie eine Mikropyramide oder eine Mikrolinse in die Beschichtung eingeschrieben werden. Die Form der gefertigten Sub-Mikrostruktur und/oder Mikrostruktur entspricht dabei der verwendeten vordefinierten Lichtdosis für einzelne XY-Punkte bzw. Pixel des Modellobjekts der Sub-Mikrostruktur und/oder Mikrostruktur.

Nach dem Bad in einem Entwickler können so, abhängig von dem verwendeten fotoempfindlichen Material unbelichtete oder belichtete Bereiche herausgelöst werden. Somit können nahezu beliebige ein- oder mehrdimensionale Sub-Mikrostrukturen und/oder Mikrostrukturen aus unterschiedlichen photosensitiven Materialien hergestellt werden.

Im anschließenden Schritt erfolgt ein galvanisches Abformen des strukturierten Modellobjekts unter Bildung eines Formeinsatzes mit einer Sub-Mikrostruktur und/oder Mikrostruktur.

Ein solcherart galvanisch abgeformter Formeinsatz bietet den Vorteil, vollständig aus Metall gefertigt zu sein und somit gute Verschleißeigenschaften, hohe thermische Leitfähigkeit sowie eine hohe mechanische Festigkeit zu haben. Der Formeinsatz ist aufgrund des galvanischen Abformverfahrens ein präzises Abbild der Kontur des strukturierten Modellobjekts und kann als sogenannter Netshape-Formeinsatz ohne weitere Nachstrukturierung beispielsweise in einem Spritzgussverfahren direkt als Spritzgusswerkzeugeinsatz eingesetzt werden. Je nach Auswahl der Metalle bzw. Metalllegierungen für die galvanische Abformung können bedarfsweise auch Formeinsätze hergestellt werden, die ausgezeichnete Korrosions- und Verschleißeigenschaften aufweisen.

Erfindungsgemäß wird bei einem erfindungsgemäßen Verfahren zur Herstellung eines Formeinsatzes nach dem Anfertigen der dreidimensionalen Makrostruktur des Modellobjekts sowie vor dem Beschichten der Freiformfläche die angefertigte Makrostruktur zumindest abschnittsweise geglättet. Das Glätten der Makrostruktur erfolgt mittels Schleifen und/oder Polieren der Oberflächen.

Gemäß der Erfindung weist die angefertigte Makrostruktur des Modellobjekts zumindest eine Freiformfläche mit einer gekrümmten Oberfläche auf. Freiformkurven bzw. -flächen sind beliebige Kurven bzw. Flächen, die sich mittels sogenannter Splines, mathematisch ausgedrückt mittels stückweiser polynomialer Funktionen, beschreiben lassen. Auch einzelne Flächenabschnitte des Modellobjekts können Freiformflächen sein.

Zum Strukturieren der Beschichtung können verfahrensgemäß Strukturierungsverfahren aus der folgenden Gruppe ausgewählt werden: Fotostrahllithographie, Ionenstrahllithographie, Elektronenstrahllithographie, Laserlithographie, und/oder Laser-Abtragung. Die Vorteile und Wirkungsweisen dieser Strukturierungsverfahren sind an sich bekannt. Neuartig ist jedoch deren Einsatz zum Strukturieren einer Beschichtung, die auf einer Makrostruktur eines Modellobjekts für die Herstellung eines Formeinsatzes aufgebracht ist. Vorteilhaft kann bei einem erfindungsgemäßen Verfahren zur Herstellung eines Formeinsatzes die strukturierbare Beschichtung ein lichtempfindliches Material, vorzugsweise ein Fotolack, sein. Besonders zweckmäßig können mit einer solchen Beschichtung gegebenenfalls auch geringe Unebenheiten bzw. Rauigkeiten der Makrostruktur ausgeglichen werden.

In einer zweckmäßigen Weiterbildung kann bei einem Verfahren gemäß der Erfindung das Strukturieren der lichtempfindlichen Beschichtung ein anschließendes nasschemisches Entwickeln des lichtempfindlichen Materials zum Erstellen der Sub-Mikrostrukturen und/oder Mikrostrukturen auf der Makrostruktur des Modellobjekts umfassen.

Das Grundprinzip der Fotolithographie ist dem Fachmann beispielsweise aus der Halbleitersowie Leiterplattenfertigung bekannt. Dabei erfolgt die Strukturierung einer dünnen ganzflächig abgeschiedenen Opferschicht aus einer lichtempfindlichen Beschichtung, beispielsweise aus einem Fotolack, durch eine lokale Änderung der chemischen Eigenschaften des Fotolacks und dessen Entfernen in den veränderten (Positivlack) bzw. unveränderten (Negativlack) Bereichen.

In einem ersten Schritt wird dazu der flüssige Fotolack beispielsweise durch Eintauchbeschichtung (dip-coating) oder Rotationsbeschichtung (spin-coating) oder andere geeignete Methoden wie beispielsweise mittels Sprühbeschichtung (spray-coating) auf der Makrostruktur des Modellobjekts aufgebracht. Anschließend wird die Fotolackschicht mit einem Ausheizschritt bei einer erhöhten Temperatur behandelt. Dabei desorbiert das Lösungsmittel sowie ein Großteil des vorhandenen Wassers, wodurch der Fotolack stabilisiert wird. Für die chemischen Reaktionen bei der nachfolgenden Belichtung ist es jedoch wichtig, dass nicht das gesamte Wasser desorbiert und ein gewisses Maß an Restwasser in der Schicht verbleibt.

Vor der Belichtung des Fotolacks wird das beschichtete Modellobjekt zunächst genau auf das optische System der Belichtungsanlage ausgerichtet. Dazu dienen in der Regel spezielle Markierungen aus vorhergehenden Prozessschritten (direkte Ausrichtung) oder anlagenspezifische Fixpunkte (indirekte Ausrichtung). Die Belichtung selbst kann auf sehr unterschiedliche Art und Weise durchgeführt werden. Hierfür stehen an sich verschiedene Belichtungstechniken zur Verfügung, wobei hier zur Strukturierung der Beschichtung mit feinsten Sub-Mikrostrukturen die Laserlithographie ausgewählt wird. Dabei werden die chemischen Eigenschaften des Fotolacks in den belichteten Bereichen durch eine photochemische Reaktion verändert - je nach Art des Fotolacks wird der Lack entweder löslich oder unlöslich gegenüber der eingesetzten Entwicklerlösung. Ein erneuter Temperschritt dient zur Diffusion der (photo-)chemischen Komponenten und kann gegebenenfalls auch zur Verstärkung der photochemischen Reaktion bei photochemisch verstärkten Fotolacken führen.

In einem weiteren, dritten Teilschritt erfolgt die Entwicklung des Fotolacks, das heißt, die löslichen Bereiche der Schicht werden mithilfe einer Entwicklerlösung nasschemisch beispielsweise durch Sprühen, Tauchen oder Auftropfen gelöst und entfernt. Anschließend wird die entwickelte Fotolackschicht beispielsweise mit deionisiertem Wasser gespült und trocken geschleudert. Danach erfolgt nochmals ein Temperschritt bei erhöhter Temperatur, bei dem der nun strukturierte Fotolack nochmals getrocknet und gegebenenfalls durch eine Vernetzungsreaktion stabilisiert wird. Dies ist insbesondere dann notwendig, da die strukturierte Fotolackschicht in den nachfolgenden Prozessschritten stark beansprucht wird.

Vorteilhaft kann abschließend der gesamte Strukturierungsprozess überprüft werden. Dies kann neben einer rein optischen Inspektion sowie der Detektion von Defekten auch die Messung der Ausrichtung gegenüber vorhergehenden Prozessschritten umfassen. Sollten hierbei zu viele Fehler festgestellt worden sein, kann die strukturierte Fotolackschicht vorzeitig entfernt und die gesamte Prozedur nochmals wiederholt werden.

Erfindungsgemäß wird beim erfindungsgemäßen Verfahren zur Herstellung eines Formeinsatzes die Makrostruktur des Modellobjekts mit einem additiven Fertigungsverfahren mit einem 3D-Drucker angefertigt. Die Anfertigung der Makrostruktur mittels 3D-Druck Technologie kann schichtweise erfolgen, weshalb auch komplexe Makrostrukturen, welche beispielsweise Kavitäten aufweisen, hergestellt werden können.

Zweckmäßig kann bei einem erfindungsgemäßen Verfahren zur Herstellung eines Formeinsatzes beim galvanischen Abformen des strukturierten Modellobjekts ein Formeinsatz aus einem Metall enthaltend Nickel und/oder eine Nickel-Legierung erhalten werden.

Beispielsweise kann mit einer Nickel-Phosphor-Galvanik eine harte Nickel-Phosphor-Schicht als Formeinsatz erzeugt werden, die antimagnetisch ist und ausgezeichnete Korrosions- und Verschleißeigenschaften aufweist.

Chemisch bzw. elektrochemisch abgeschiedene Nickelschichten können äußerst gleichmäßig auf Werkstücke aufgebracht werden. Chemisch bzw. elektrochemisch abgeschiedene Nickel-Phosphor-Schichten bieten den Vorteil, dass Formeinsätze mit hoher Härte und antimagnetischen Eigenschaften bei geringeren Kosten hergestellt werden können.

Wie eingangs bereits erwähnt stellt sich die vorliegende Erfindung auch die Aufgabe, ein Verfahren anzugeben, um hochpräzise Werkstücke mit (Sub-)Mikrostrukturen in gleichbleibender hoher Fertigungsqualität ihrer Mikrostrukturen kostengünstig herstellen zu können.

Erfindungsgemäß wird diese Aufgabe von einem Spritzgussverfahren zur Herstellung von diffraktiven, refraktiven und/oder reflektiven Strukturen auf optischen Komponenten mit den Merkmalen des Anspruchs 6 gelöst. Bei einem solchen Spritzgussverfahren wird ein verfahrensgemäß hergestellter galvanisch abgeformter Formeinsatz, welcher eine abgeformte Sub- Mikrostruktur und/oder Mikrostruktur eines strukturierten Modellobjekts aufweist, als Spritzgusswerkzeugeinsatz zum Abformen einer Sub-Mikrostruktur und/oder Mikrostruktur auf ein Werkstück eingesetzt. Im Rahmen der Erfindung wird unter dem Begriff eines Spritzgussverfahrens auch ein Spritzprägeverfahren mitumfasst. Ein verfahrensgemäß hergestellter galvanisch abgeformter Formeinsatz kann demnach ebenso als Spritzprägewerkzeugeinsatz in einem Spritzprägeverfahren eingesetzt werden.

Aufgrund der exakten galvanischen Abformung der Strukturen des Modellobjekts kann der abgeformte Formeinsatz direkt und ohne Nachbearbeitung als Netshape-Formeinsatz als Spritzgusswerkzeugeinsatz eingesetzt werden. Somit kann der Formenbau für ein Spritzgussverfahren sehr rasch, flexibel und kostengünstig erfolgen. Der metallische Formeinsatz bietet den Vorteil, verschleißfest zu sein und ein exaktes Abbild des zuvor hergestellten Modellobjekts und der darauf angeordneten Sub-Mikrostrukturen zu sein.

Gegebenenfalls kann beim Einsatz von Kunststoff, insbesondere beim Einsatz eines Thermoplasts als Spritzgussmaterial ein prozessbedingtes Schrumpfen des eingesetzten Materials bereits bei der geometrischen Auslegung und Anfertigung des Formeinsatzes mit berücksichtigt werden. Ein mögliches Schrumpfverhalten hängt von der Auswahl des eingesetzten Spritzgussmaterials ab und ist üblicherweise physikalisch bedingt.

Im Rahmen der Erfindung ist es auch möglich, den verfahrensgemäß hergestellten galvanisch abgeformten Formeinsatz, welcher eine abgeformte Sub-Mikrostruktur und/oder Mikrostruktur eines strukturierten Modellobjekts aufweist, als Spritzgusswerkzeugeinsatz und/oder als Spritzprägewerkzeugeinsatz in einem Spritzgussverfahren zu verwenden. Die vorstehend genannten Vorteile für das Spritzgussverfahren gelten sinngemäß auch für die Verwendung des galvanisch abgeformten Formeinsatzes als Spritzgusswerkzeug und/oder als Spritzprägewerkzeugeinsatz in einem solchen Spritzgussverfahren.

Wie eingangs bereits erwähnt ist es ebenfalls eine der Aufgaben der Erfindung, den bestehenden Bedarf an hochpräzisen Werkstücken mit (Sub-)Mikrostrukturen, welche in gleichbleibender Qualität ihrer Mikrostrukturen kostengünstig hergestellt werden können, abzudecken. Dies gilt insbesondere für optische Komponenten.

Erfindungsgemäß wird dazu ein Werkstück in Form einer optischen Komponente angegeben, welches in einem Spritzgussverfahren gemäß der Erfindung hergestellt ist, wobei eine Sub-Mikrostruktur und/oder Mikrostruktur des Werkstücks eine formtreue Abformung der Sub-Mikrostruktur und/oder Mikrostruktur des galvanisch abgeformten Formeinsatzes eines strukturierten Modellobjekts ist. Das Werkstück in Form einer optischen Komponente weist dazu ein Abbild der Makrostruktur mit zumindest einer Freiformfläche mit einer gekrümmten Oberfläche auf, wobei die zumindest eine Freiformfläche mittels stückweiser polynomialer mathematischer Funktionen beschreibbar ist. Auch hinsichtlich des Spritzlings, also des durch das Spritzgussverfahren erhaltenen Werkstücks gilt, dass es sich dabei vorteilhaft um ein Netshape-Werkstück handelt, welches ein möglichst formtreues Abbild der Strukturen des Modellobjekts ist und ohne weitere aufwendige Nachbearbeitung eingesetzt werden kann. Unter dem Begriff der formtreuen Abbildung ist im Rahmen der Erfindung zu verstehen, dass die Sub-Mikrostrukturen und/oder Mikrostrukturen des Modellobjekts möglichst exakt - im Rahmen der technischen und/oder physikalischen Machbarkeit - auf den galvanisch abgeformten Formeinsatz übertragen werden. Die gilt ebenso für denjenigen Anwendungsfall, in dem der Formeinsatz als Spritzgusswerkzeugeinsatz oder als Spritzprägewerkzeugeinsatz verwendet wird, um so die Sub-Mikrostrukturen und/oder Mikrostrukturen des Formeinsatzes möglichst exakt auf das entsprechende Werkstück zu übertragen.

In einer vorteilhaften Variante der Erfindung kann bei einem Werkstück für den Einsatz als optische Komponente das Werkstück aus einem Thermoplast gefertigt sein, wobei die Sub-Mikrostruktur und/oder Mikrostruktur des Werkstücks derart gestaltet ist, dass diese eine Reflexion an einer optischen Oberfläche des Werkstücks unterdrückt. Das Werkstück kann dazu aus jedem beliebigen Thermoplast gefertigt sein.

In einer weiteren vorteilhaften Weiterbildung der Erfindung kann bei einem Werkstück für den Einsatz als optische Komponente das Werkstück aus einem UV-Licht resistenten, transparenten Kunststoff, vorzugsweise aus Polymethylmethacrylat (PMMA) oder aus Polycarbonat (PC), gefertigt sein, wobei die Sub-Mikrostruktur und/oder Mikrostruktur des Werkstücks derart gestaltet ist, dass diese eine Reflexion an einer optischen Oberfläche des Werkstücks unterdrückt.

Somit können beispielsweise Plastik-Optikkomponenten erzeugt werden, welche aufgrund der abgeformten Sub-Mikrostrukturen mikrooptische Elemente auf den optischen Oberflächen realisiert werden, welche beispielhaft reflexionshemmende optische Oberflächen aufweisen. Das üblicherweise meist erforderliche aufwendige Beschichten mit einer Anti-Reflexions-Beschichtung derartiger Optikkomponenten kann somit erfolgreich vermieden werden.

Weitere Einzelheiten, Merkmale und Vorteile der Erfindung ergeben sich aus der nachfolgenden Erläuterung eines in den Zeichnungen schematisch dargestellten Ausführungsbeispiels. In den Zeichnungen zeigen:
- **Fig. 1** in einer Seitenansicht eine dreidimensionale Makrostruktur eines Modellobjekts mit schichtweisem Aufbau;
- **Fig. 2** die in Fig. 1 gezeigte Makrostruktur des Modellobjekts mit geglätteter Oberfläche;
- **Fig. 3** die in Fig. 2 gezeigte Makrostruktur des Modellobjekts nach dem Beschichten mit einer strukturierbaren Beschichtung;
- **Fig. 4** das in Fig. 3 gezeigte Modellobjekt nach dem Strukturieren der Beschichtung;
- **Fig. 5** in einer teilweisen Schnittansicht von der Seite einen vom Modellobjekt abgeformten Formeinsatz in vom Modellobjekt abgehobener Position;
- **Fig. 6** in einer teilweisen Schnittansicht von der Seite eine Spritzgussvorrichtung, in der der Formeinsatz als Spritzgusswerkzeugeinsatz eingesetzt ist;
- **Fig. 7** in einer Seitenansicht ein Werkstück, welches als Spritzling in der in Fig. 6 veranschaulichten Spritzgussvorrichtung hergestellt wurde.

Die erfindungsgemäße Herstellung eines Formeinsatzes wird auch in fotografischen Abbildungen veranschaulicht. In den Abbildungen zeigen:

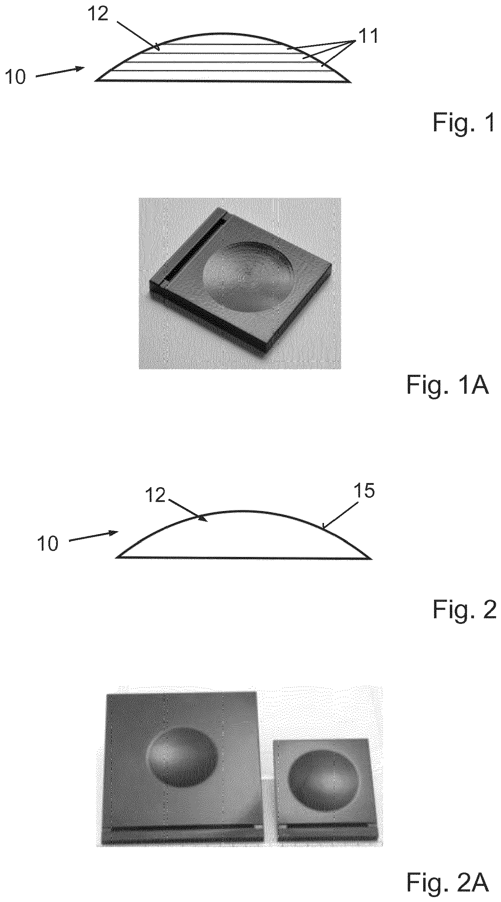

- **Fig. 1A** eine Fotografie einer Makrostruktur eines Modellobjekts in isometrischer Darstellung schräg von der Seite;
- **Fig. 2A** eine Fotografie der Makrostrukturen zweier Modellobjekte mit geglätteten Oberflächen, wobei die Modellobjekte in einer isometrischen Ansicht schräg von vorne dargestellt sind;

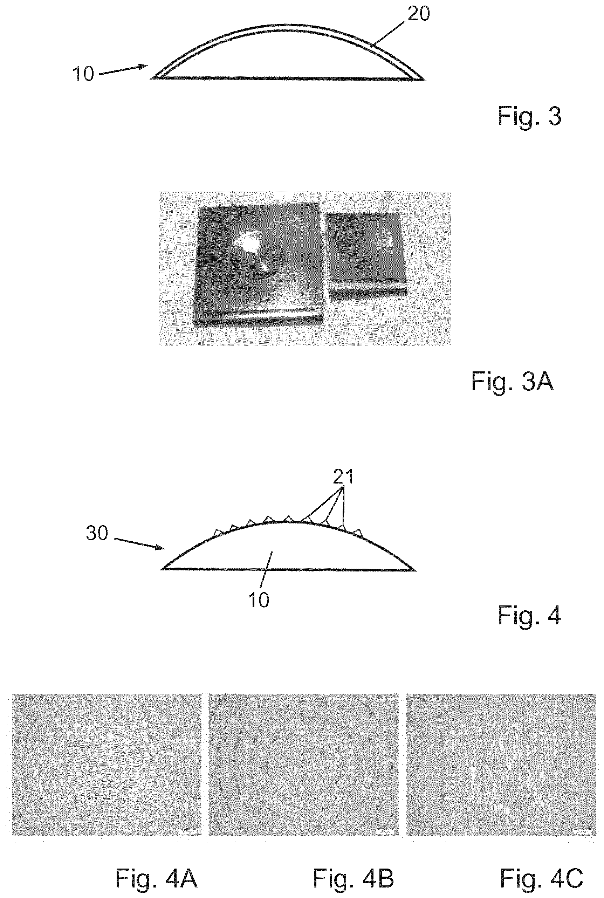

- **Fig. 3A** eine Fotografie der Makrostrukturen der zwei in Fig. 2A gezeigten Modellobjekte nach dem Beschichten mit einer strukturierbaren Beschichtung;
- **Fig. 4A** bis **Fig. 4C** jeweils Fotografien von lichtmikroskopischen Aufnahmen, die in unterschiedlichen Vergrößerungen jeweils eine Sub-Mikrostruktur zeigen, die in der Beschichtung eines Modellobjekts eingeformt ist;

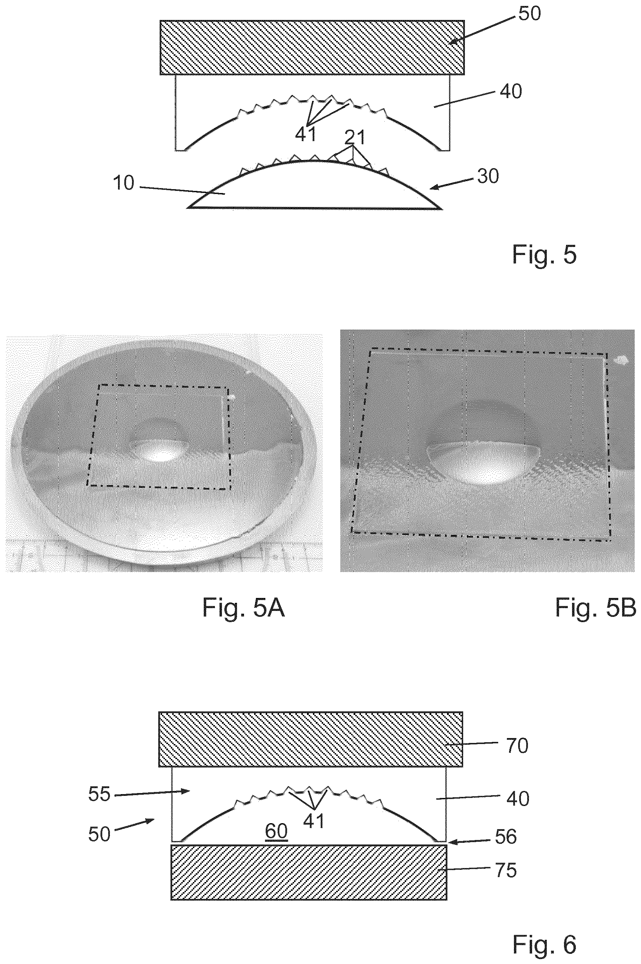

- **Fig. 5A** und **Fig. 5B** jeweils Fotografien eines galvanisch abgeformten Formeinsatzes in isometrischen Schrägansichten von vorne, wobei die Fig. 5B eine vergrößerte Detailansicht des in Fig. 5A strichpunktiert markierten Bildausschnitts ist;

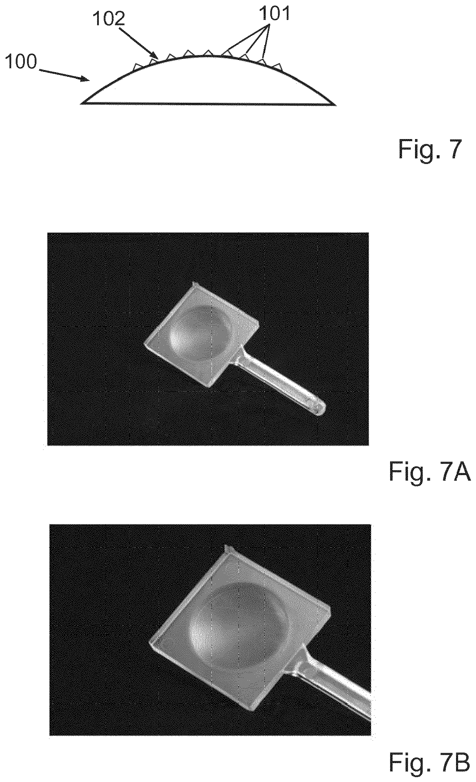

- **Fig. 7A** und **Fig. 7B** jeweils Fotografien eines in einem erfindungsgemäßen Spritzgussverfahren hergestellten Werkstücks jeweils in unterschiedlichen Vergrößerungen.

### Nun zur Beschreibung der Figuren im Detail:

**Fig. 1** zeigt schematisch eine dreidimensionale Makrostruktur 10 eines Modellobjekts mit schichtweisem Aufbau 11. Die Makrostruktur 10 weist hier beispielsweise ein Volumen von einigen Kubikzentimetern (cm³) auf und wurde schichtweise in einem 3D-Drucker ausgedruckt. Die gekrümmte Oberfläche der Makrostruktur 10 ist eine Freiformfläche 12. Als Material zur Herstellung der Makrostruktur 10 wurde dazu beispielsweise der Kunststoff VeroBlack verwendet, welcher schnell aushärtet, eine niedrige Wärmeformbeständigkeitstemperatur sowie eine geringe Wasserabsorptionsrate aufweist und daher bevorzugt zum Prototypenbau in 3D-Druckern eingesetzt wird. Dieser Kunststoff ist nicht transparent.

**Fig. 1A** zeigt - vergleichbar mit Fig. 1 - eine entsprechende Fotografie einer Makrostruktur eines Modellobjekts, welches ebenfalls schichtweise in einem 3D-Drucker (Typ OBJET 30 Pro der Fa. Stratasys) ausgedruckt wurde. Als Material zur Herstellung der Makrostruktur dieses Modellobjekts wurde dazu ebenfalls der Kunststoff VeroBlack verwendet.

**Fig. 2** zeigt die in Fig. 1 veranschaulichte Makrostruktur 10 des Modellobjekts bereits mit einer geglätteten Oberfläche 15. Damit die Oberflächenqualität der im 3D-Drucker ausgedruckten Makrostruktur 10 des Modellobjekts den strengen Anforderungen beispielsweise von optischen Komponenten wie optischen Linsen entspricht, muss die Oberfläche der Makrostruktur 10 meist nach dem Drucken nachbearbeitet werden. Zu diesem Zweck wird der Kunststoff, welcher die Makrostruktur 10 bildet, beispielsweise durch Schleifen und/oder Polieren geglättet.

**Fig. 2A** zeigt - vergleichbar mit Fig. 2 - eine Fotografie der Makrostrukturen zweier Modellobjekte mit geglätteten Oberflächen. Die Rauigkeit der durch Schleifen und Polieren nachbearbeiteten Oberflächen der beiden Modellobjekte beträgt hier beispielsweise jeweils einen Mittenrauwert Rₐ unter 40 nm (Nanometer).

**Fig. 3** zeigt die in Fig. 2 veranschaulichte Makrostruktur 10 des Modellobjekts nach dem Beschichten mit einer strukturierbaren Beschichtung 20. Hier wurde als stukturierbare Beschichtung 20 ein lichtempfindlicher Fotolack gewählt. Beispielhaft wird dazu ein kommerziell erhältlicher Fotolack der Firma Microchemicals verwendet. Die Beschichtung der Makrostruktur 10 erfolgt beispielsweise mittels eines Eintauch-Beschichtungsverfahrens (Dip-Coating). Aufgrund des Beschichtens wird mit der Beschichtung 20 vorteilhaft eine optisch glatte Oberfläche des Modellobjekts erzielt. Die Oberfläche der Makrostruktur 10 des Modellobjektes muss daher nicht zwingend optisch glatt sein, um später optische Komponenten bzw. Werkstücke mit optischen Oberflächen fertigen zu können. Das heißt also, dass die Oberfläche der Makrostruktur des Modellobjekts auch gegebenenfalls nach einer Nachbehandlung zur Glättung der Oberfläche nicht zwingend optisch glatt sein muss. Vorteilhaft wird die Oberflächenqualität bzw. Rauigkeit des Modellobjekts somit durch die Oberflächenqualität des Fotolacks bzw. allgemein der Beschichtung definiert.

**Fig. 3A** zeigt - vergleichbar mit Fig. 3 - eine Fotografie der Makrostrukturen der zwei in Fig. 2A dargestellten Modellobjekte nach dem Beschichten mit einem strukturierbaren Fotolack.

**Fig. 4** zeigt das in Fig. 3 gezeigte Modellobjekt 30 nach dem Strukturieren der Beschichtung. Mittels direkter Laserlithographie wurden Sub-Mikrostrukturen 21 in der aus Fotolack hergestellten Beschichtung 20 auf der Makrostruktur 10 des Modellobjekts 30 ausgebildet. Anschließend wurde in einem nasschemischen Entwicklungsverfahren der lichtempfindliche Fotolack entwickelt, um die Sub-Mikrostrukturen 21 auf der Oberfläche der Makrostruktur 10 des Modellobjekts 30 zu erhalten.

Die Abbildungen **Fig. 4A** bis **Fig. 4C** zeigen jeweils Fotografien von lichtmikroskopischen Aufnahmen, die in unterschiedlichen Vergrößerungen jeweils eine Sub-Mikrostruktur darstellen, die in der Beschichtung eines Modellobjekts eingeformt ist. Der kleine Balken jeweils rechts unten in den Abbildungen gibt jeweils den gewählten Maßstab an: für Fig. 4A sind dies 100 µm (Mikrometer), für Fig. 4B sind dies 50 µm (Mikrometer) sowie für Fig. 4C ist der Vergrößerungsmaßstab mit 20 µm (Mikrometer) Länge des kleinen Balkens rechts unten angegeben. In Fig. 4C ist erkennbar, dass die konzentrischen Kreisstrukturen jeweils aus Doppellinien gebildet sind, welche jeweils eine Linienbreite von einem Mikrometer aufweisen und voneinander einen Mikrometer beabstandet sind.

**Fig. 5** zeigt in einer teilweisen Schnittansicht einen vom Modellobjekt 30 abgeformten Formeinsatz 40 in vom Modellobjekt 30 abgehobener Position. Der Formeinsatz 40 wurde durch galvanisches Abformen der Kontur des Modellobjekts 30 erhalten. Sowohl die Makrostruktur 10, als auch die Submikrostrukturen 21 des Modellobjekts 30 werden bei der direkten galvanischen Abformung beispielsweise mittels einer Nickel-Galvanik exakt abgeformt. Der solcherart galvanisch gewonnene Formeinsatz 40 weist somit ein formtreues, also ein im Rahmen der technisch und physikalisch machbaren Möglichkeiten möglichst exaktes Abbild an Sub-Mikrostrukturen 41 auf, die einem inversen Model-Abdruck der Kontur des Modellobjekts 30 entsprechen. Aufgrund der galvanischen Abformung ist die Abformung des Modellobjekts 30 derart formtreu, dass eine allfällige Nachbearbeitung des Formeinsatzes 40 nicht erforderlich ist. Der Formeinsatz 40 ist hier bereits in einer Werkzeughälfte einer Spritzgussvorrichtung 50 aufgenommen.

**Fig. 5A** und **Fig. 5B** zeigen jeweils Fotografien eines galvanisch abgeformten Formeinsatzes, wobei die Fig. 5B eine vergrößerte Detailansicht des in Fig. 5A strichpunktiert markierten Bildausschnitts ist. Der Formeinsatz ist hier ein sogenannter Nickel-Metal-Mold, der durch galvanisches Abformen einer Kontur eines Modellobjekts samt den darauf angebrachten Sub-Mikrostrukturen erhalten wurde. Der hier dargestellte Formeinsatz entspricht im Wesentlichen dem in Fig. 5 schematisch gezeigten Formeinsatz 40.

**Fig. 6** zeigt in einer teilweisen Schnittansicht in schematischer Weise eine Spritzgussvorrichtung 50, in welcher der in Fig. 5 dargestellte Formeinsatz 40 als Spritzgusswerkzeugeinsatz 55 eingesetzt ist. Der Formeinsatz 40 ist hier an einer Düsenseite 70 der Spritzgussvorrichtung 50 befestigt. Ein Einfüllkanal 56 ermöglicht die Zufuhr von Spritzgussmaterial in eine Kavität 60 der Spritzgussvorrichtung 50. Die Kavität 60 wird teilweise von einer Auswerferseite 75 der Spritzgussvorrichtung 50 begrenzt. Der galvanisch abgeformte Formeinsatz 40 samt seiner Sub-Mikrostruktur 41 bildet ebenfalls einen Abschnitt zur Begrenzung der Kavität. Als Spritzgussmaterial wird beispielsweise geschmolzener Kunststoff verwendet. Für optische Anwendungen, um also Spritzgusswerkstücke mit optischen Oberflächen bzw. mit optischen Eigenschaften herstellen zu können, werden bevorzugt Kunststoffe verwendet, die transparent aushärten. Beispielsweise werden dazu Polymethylmethacrylat (PMMA) oder Polycarbonat (PC) als Spritzgussmaterialien verwendet.

**Fig. 7** zeigt in einer Seitenansicht ein Werkstück 100, welches als Spritzling in der in Fig. 6 veranschaulichten Spritzgussvorrichtung 50 hergestellt wurde. Das Werkstück 100 weist eine Sub-Mikrostruktur 101 auf, welche ein exaktes Abbild bzw. eine Abformung der Sub-Mikrostruktur 41 des galvanisch hergestellten Formeinsatzes 40 ist. Das schematisch gezeigte Werkstück 100 weist eine optische Oberfläche 102 auf, die aufgrund der aufgebrachten Sub-Mikrostruktur 101 reflexionshemmende Eigenschaften hat.

Die beiden Fotografien von **Fig. 7A** und **Fig. 7B** zeigen jeweils ein in einem erfindungsgemäßen Spritzgussverfahren hergestelltes Werkstück, welches vergleichbar mit dem in Fig. 7 schematisch dargestellten Werkstück 100 ist, in unterschiedlichen Vergrößerungen. Das in den beiden Abbildungen Fig. 7A und Fig. 7B gezeigte Werkstück ist hier beispielsweise aus transparentem sowie UV-stabilem Polymethylmethacrylat (PMMA) hergestellt und bildet eine komplexe dreidimensionale optische Komponente, die beispielsweise für Beleuchtungssysteme, in der Sensorik, der Optoelektronik oder der Robotik eingesetzt werden kann. Die Herstellung der optischen Komponente kann mit dem erfindungsgemäßen Spritzgussverfahren kostengünstig und effizient erfolgen. Aufgrund der Verwendung eines erfindungsgemäß hergestellten, galvanisch abgeformten Formeinsatzes erfolgt die Abformung der dreidimensionalen Sub-Mikrostrukturen vom Modellobjekt auf das Werkstück mit höchstmöglicher Präzision sowie Formtreue.

### LISTE DER POSITIONSZEICHEN

- 10: Makrostruktur des Modellobjekts
- 11: Schichtaufbau der Makrostruktur
- 12: Freiformfläche, Kontur(abschnitt) der Makrostruktur
- 15: geglättete Oberfläche
- 20: strukturierbare Beschichtung
- 21: Sub-Mikrostruktur und/oder Mikrostruktur des Modellobjekts
- 30: Modellobjekt
- 40: Formeinsatz
- 41: Sub-Mikrostruktur und/oder Mikrostruktur des Formeinsatzes
- 50: Spritzgussvorrichtung
- 55: Spritzgusswerkzeugeinsatz
- 56: Einfüllkanal
- 60: Kavität
- 70: Düsenseite der Spritzgussvorrichtung
- 75: Auswerferseite der Spritzgussvorrichtung
- 100: Werkstück
- 101: Sub-Mikrostruktur und/oder Mikrostruktur des Werkstücks
- 102: optische Oberfläche des Werkstücks

## Patentansprüche

1. Verfahren zur Herstellung eines dreidimensionalen Formeinsatzes (40) mit Sub-Mikrostrukturen (41) und/oder Mikrostrukturen, umfassend die folgenden Schritte:
- Anfertigen einer dreidimensionalen Makrostruktur (10) eines Modellobjekts (30) aus Kunststoff mittels 3D-Druck Technologie, wobei die angefertigte Makrostruktur (10) des Modellobjekts (30) zumindest eine Freiformfläche (12) aufweist, wobei die zumindest eine Freiformfläche (12) eine gekrümmte Oberfläche ist, die mittels stückweiser polynomialer mathematischer Funktionen beschreibbar ist;
- Glätten der zumindest einen Freiformfläche (12) der angefertigten Makrostruktur (10) mittels Schleifen und/oder Polieren, bis eine Rauigkeit der nachbearbeiteten Freiformfläche (12) mit einem Mittenrauwert Ra unter 40 nm erreicht wird;
- Beschichten der zumindest einen Freiformfläche (12) der angefertigten Makrostruktur (10) mit einer strukturierbaren Beschichtung (20) aus einem lichtempfindlichen Material, wobei mit der Beschichtung (20) eine optisch glatte Oberfläche der zumindest einen Freiformfläche (12) erzielt wird;
- Strukturieren der Beschichtung (20) mittels eines Strukturierungsverfahrens unter Ausbildung von Sub-Mikrostrukturen (21) und/oder Mikrostrukturen auf der angefertigten Makrostruktur (10) des Modellobjekts (30);
- Galvanisches Abformen des strukturierten (21) Modellobjekts (30) unter Bildung eines Formeinsatzes (40) mit einer Sub-Mikrostruktur (41) und/oder Mikrostruktur.

2. Verfahren nach Anspruch 1, wobei das Strukturierungsverfahren zum Strukturieren der Beschichtung (20) ausgewählt wird aus der Gruppe umfassend: Fotostrahllithographie, Ionenstrahllithographie, Elektronenstrahllithographie, Laserlithographie, und/oder Laser-Abtragung.

3. Verfahren nach einem der Ansprüche 1 oder 2, wobei die strukturierbare Beschichtung (20) ein Fotolack ist.

4. Verfahren nach einem der Ansprüche 1 bis 3, wobei das Strukturieren der lichtempfindlichen Beschichtung (20) ein anschließendes nasschemisches Entwickeln des lichtempfindlichen Materials zum Erstellen der Sub-Mikrostrukturen (21) und/oder Mikrostrukturen auf der angefertigten Makrostruktur (10) des Modellobjekts (30) umfasst.

5. Verfahren nach einem der Ansprüche 1 bis 4, wobei beim galvanischen Abformen des strukturierten (21) Modellobjekts (30) ein Formeinsatz (40) aus einem Metall enthaltend Nickel und/oder eine Nickel-Legierung erhalten wird.

6. Spritzgussverfahren zur Herstellung von diffraktiven, refraktiven und/oder reflektiven Strukturen auf optischen Komponenten, **dadurch gekennzeichnet, dass** ein mit einem Verfahren nach einem der Ansprüche 1 bis 5 hergestellter galvanisch abgeformter Formeinsatz (40), welcher eine abgeformte Sub-Mikrostruktur (41) und/oder Mikrostruktur eines strukturierten (21) Modellobjekts (30) aufweist, direkt als Spritzgusswerkzeugeinsatz (55) zum Abformen einer diffraktiven, refraktiven und/oder reflektiven (Sub-) Mikrostruktur (101) auf ein Werkstück (100) in Form einer optischen Komponente, vorzugsweise einer optischen Linse, eingesetzt wird.

7. Verwendung eines mit einem Verfahren nach einem der Ansprüche 1 bis 5 hergestellten galvanisch abgeformten Formeinsatzes (40), welcher eine abgeformte Sub-Mikrostruktur (41) und/oder Mikrostruktur eines strukturierten (21) Modellobjekts (30) aufweist, als Spritzgusswerkzeugeinsatz (55) und/oder als Spritzprägewerkzeugeinsatz in einem Spritzgussverfahren.

8. Werkstück (100) in Form einer optischen Komponente, hergestellt in einem Spritzgussverfahren nach Anspruch 6, wobei eine Sub-Mikrostruktur (101) und/oder Mikrostruktur des Werkstücks (100) eine formtreue Abformung der Sub-Mikrostruktur (41) und/oder Mikrostruktur des galvanisch abgeformten Formeinsatzes (40) eines strukturierten (21) Modellobjekts (30) ist, die aus Kunststoff hergestellt ist.

9. Werkstück (100) nach Anspruch 8, wobei das Werkstück (100) aus einem Thermoplast gefertigt ist und die Sub-Mikrostruktur (101) und/oder Mikrostruktur des Werkstücks (100) derart gestaltet ist, dass diese eine Reflexion an einer optischen Oberfläche (102) des Werkstücks (100) unterdrückt.

10. Werkstück (100) nach Anspruch 8, wobei das Werkstück (100) aus einem UV-Licht resistenten, transparenten Kunststoff, vorzugsweise aus Polymethylmethacrylat (PMMA) oder aus Polycarbonat (PC), gefertigt ist und die Sub-Mikrostruktur (101) und/oder Mikrostruktur des Werkstücks (100) derart gestaltet ist, dass diese eine Reflexion an einer optischen Oberfläche (102) des Werkstücks (100) unterdrückt.

## Claims

1. Method for manufacturing a three-dimensional mold insert (40) with sub-microstructures (41) and/or microstructures, comprising the following steps:
- Fabricating a three-dimensional macrostructure (10) of a model object (30) from plastic by means of 3D printing technology, wherein the fabricated macrostructure (10) of the model object (30) has at least one free-form surface (12), wherein the at least one free-form surface (12) is a curved surface that can be described by means of piecewise polynomial mathematical functions;
- smoothing the at least one free-form surface (12) of the fabricated macrostructure (10) by means of grinding and/or polishing until a roughness of the post-processed free-form surface (12) with a center roughness value Ra below 40 nm is achieved;
- coating the at least one free-form surface (12) of the fabricated macrostructure (10) with a patternable coating (20) of a light-sensitive material, the coating (20) achieving an optically smooth surface of the at least one free-form surface (12);
- Structuring of the coating (20) by means of a structuring process with formation of sub-microstructures (21) and/or microstructures on the fabricated macrostructure (10) of the model object (30);
- Electroforming the patterned (21) model object (30) forming a mold insert (40) with a sub-microstructure (41) and/or microstructure.

2. Method according to claim 1, wherein the patterning method for patterning the coating (20) is selected from the group comprising: photo beam lithography, ion beam lithography, electron beam lithography, laser lithography, and/or laser ablation.

3. Method according to any one of claims 1 or 2, wherein the patternable coating (20) is a photoresist.

4. Method according to any one of claims 1 to 3, wherein patterning the photosensitive coating (20) comprises subsequent wet chemical development of the photosensitive material to create the sub-microstructures (21) and/or microstructures on the fabricated macrostructure (10) of the model object (30).

5. Method according to any one of claims 1 to 4, wherein during the electroforming of the patterned (21) model object (30), a mold insert (40) made of a metal containing nickel and/or a nickel alloy is obtained.

6. Injection molding process for producing diffractive, refractive and/or reflective structures on optical components, **characterized in that** an electroformed mold insert (40) produced by a process according to any one of claims 1 to 5, which has a molded sub-microstructure (41) and/or microstructure of a structured (21) model object (30), is used directly as an injection molding tool insert (55) for molding a diffractive, refractive and/or reflective (sub-) microstructure (101) onto a workpiece (100) in the form of an optical component, preferably an optical lens.

7. Use of an electroformed mold insert (40) produced by a method according to any one of claims 1 to 5, which has a molded sub-microstructure (41) and/or microstructure of a structured (21) model object (30), as an injection mold insert (55) and/or as an injection compression mold insert in an injection molding process.

8. Workpiece (100) in the form of an optical component, produced in an injection molding process according to claim 6, wherein a sub-microstructure (101) and/or microstructure of the workpiece (100) is a true-to-form molding of the sub-microstructure (41) and/or microstructure of the electroformed mold insert (40) of a structured (21) model object (30), which is produced from plastic.

9. Workpiece (100) according to claim 8, wherein the workpiece (100) is made of a thermoplastic and the sub-microstructure (101) and/or microstructure of the workpiece (100) is designed such that it suppresses a reflection on an optical surface (102) of the workpiece (100).

10. Workpiece (100) according to claim 8, wherein the workpiece (100) is made of a UV light resistant transparent plastic, preferably polymethyl methacrylate (PMMA) or polycarbonate (PC), and the sub-microstructure (101) and/or microstructure of the workpiece (100) is designed such that it suppresses a reflection on an optical surface (102) of the workpiece (100).

## Revendications

1. Procédé de fabrication d'un insert de moule tridimensionnel (40) avec des sous-microstructures (41) et/ou des microstructures, comprenant les étapes suivantes :
- Fabrication d'une macrostructure tridimensionnelle (10) d'un objet modèle (30) en matière plastique au moyen d'une technologie d'impression 3D, la macrostructure fabriquée (10) de l'objet modèle (30) présentant au moins une surface de forme libre (12), la au moins une surface de forme libre (12) étant une surface incurvée qui peut être décrite au moyen de fonctions mathématiques polynomiales par morceaux ;
- Lissage de la au moins une surface de forme libre (12) de la macrostructure (10) fabriquée au moyen d'un meulage et/ou d'un polissage, jusqu'à ce qu'une rugosité de la surface de forme libre (12) retouchée soit obtenue avec une rugosité moyenne Ra inférieure à 40 nm ;
- Revêtement de la au moins une surface de forme libre (12) de la macrostructure (10) fabriquée avec un revêtement structurable (20) en un matériau photosensible, le revêtement (20) permettant d'obtenir une surface optiquement lisse de la au moins une surface de forme libre (12);
- Structuration du revêtement (20) au moyen d'un procédé de structuration avec formation de sub-microstructures (21) et/ou de microstructures sur la macrostructure (10) fabriquée de l'objet modèle (30) ;
- Moulage galvanique de l'objet modèle (30) structuré (21) avec formation d'un insert de moule (40) avec une sub-microstructure (41) et/ou une microstructure.

2. Procédé selon la revendication 1, dans lequel le procédé de structuration pour structurer le revêtement (20) est choisi dans le groupe comprenant : la lithographie par photo-jet, la lithographie par faisceau d'ions, la lithographie par faisceau d'électrons, la lithographie par laser, et/ou l'ablation par laser.

3. Procédé selon l'une des revendications 1 ou 2, dans lequel le revêtement structurable (20) est un photorésist.

4. Procédé selon l'une des revendications 1 à 3, dans lequel la structuration du revêtement photosensible (20) comprend un développement ultérieur par voie chimique humide du matériau photosensible pour créer les sub-microstructures (21) et/ou les microstructures sur la macrostructure (10) fabriquée de l'objet modèle (30).

5. Procédé selon l'une des revendications 1 à 4, dans lequel, lors du moulage galvanique de l'objet modèle (30) structuré (21), on obtient un insert de moulage (40) en un métal contenant du nickel et/ou un alliage de nickel.

6. Procédé de moulage par injection pour la fabrication de structures diffractives, réfractives et/ou réfléchissantes sur des composants optiques, **caractérisé en ce qu'**un insert de moule (40) formé par galvanisation et fabriqué avec un procédé selon l'une des revendications 1 à 5, qui présente une sub-microstructure (41) et/ou une microstructure moulée d'un objet modèle (30) structuré (21), est utilisé directement comme insert de moule d'injection (55) pour mouler une (sub-) microstructure (101) diffractive, réfractive et/ou réflective sur une pièce (100) sous la forme d'un composant optique, de préférence une lentille optique.

7. Utilisation d'un insert de moule (40) formé par électroformage, fabriqué par un procédé selon l'une des revendications 1 à 5, qui présente une sub-microstructure (41) formée et/ou une microstructure d'un objet modèle (30) structuré (21), comme insert de moule d'injection (55) et/ou comme insert de moule de moulage par injection dans un procédé de moulage par injection.

8. Pièce (100) sous la forme d'un composant optique, fabriquée dans un procédé de moulage par injection selon la revendication 6, dans laquelle une sub-microstructure (101) et/ou une microstructure de la pièce (100) est une empreinte fidèle de la sub-microstructure (41) et/ou de la microstructure de l'insert de moule (40) formé par galvanisation d'un objet modèle (30) structuré (21), qui est fabriqué en matière plastique.

9. Pièce (100) selon la revendication 8, dans laquelle la pièce (100) est fabriquée à partir d'un thermoplastique et la sub-microstructure (101) et/ou la microstructure de la pièce (100) est conçue de telle sorte qu'elle supprime une réflexion sur une surface optique (102) de la pièce (100).

10. Pièce (100) selon la revendication 8, dans laquelle la pièce (100) est fabriquée à partir d'une matière plastique transparente résistante à la lumière UV, de préférence à partir de polyméthacrylate de méthyle (PMMA) ou de polycarbonate (PC), et la sub-microstructure (101) et/ou la microstructure de la pièce (100) est conçue de telle sorte qu'elle supprime une réflexion sur une surface optique (102) de la pièce (100).
